# EUROPEAN PATENT APPLICATION

(11) **EP 2 604 112 A1**
(43) Date of publication of application: **19.06.2013**
(21) Application number: 11464026.1
(22) Date of filing: 15.12.2011
(51) Int. Cl.: A01N 37/02, A01N 37/06, A01N 43/16, A01P 19/00

(54) **Pollination enhancement composition, process to obtain it and methods for its application on crops**

(30) Priority: 14.12.2011 RO 201101399
(71) Applicant: Institutul National de Cercetare Dezvoltare Pentru Chimie si Petrochimie - Icechim, Bucuresti, Sectorul6, 060021 (RO)
(72) Inventor: Oancea, Florin, Bucuresti Sectorul 5 (RO); Velea, Sanda, Bucuresti Sectorul 2 (RO); Frangu, Octavian, Bucuresti Sectorul 2 (RO); Stepan, Emil, Bucuresti Sectorul 6 (RO); Stilpeanu, Daniela Lelieana, Bucuresti Sectorul 6 (RO)

(57) **Abstract**

The present provide a composition for crop pollination enhancement, which include ethyl-maltol, a compound acting as flavor enhancers, and a synthetic mixture of ethyl and methyl esthers of fatty acids, which have a similar activity with brood esthers pheromone. The synthetic mixture of ethyl and methyl esthers of fatty acids is produced by mixing ethyl and methyl esthers of fatty acids resulted from the transesterifications of olive oil and flax seed oil and from the esterification of the technical grade stearic acid. On this composition of fatty acids is added ethyl-maltol. Resulting composition is mixed with a solution of sodium alginate, methylcellulose and an emulsifier. The resulted emulsion is ionotropic gellated with a solution of calcium chloride, diluted with water and sprayed to the crop.

## Description

### Field of the invention

The present invention relate to a composition which attract pollinators, and especially honeybees, to the flowers of cultivated plants and, in the same time, enhance the pollen collection by honeybees and flower pollination activity of attracted honeybees, as well to a process to obtain such composition, from natural and technical grade raw materials, and to a method for crop treatment.

### Background of the invention

Several composition acting like crop pollination enhancers are known. Patent US 4075783 describe a water soluble and dispersible composition, including whey, sucrose and wetting and dispersing agent. Composition is sprayed over the crop area during blooming period and, in this manner, bees are attracted and maintained in the crop area for sufficient time to accomplish the required number of visitation for pollination. This composition presents the disadvantage of a reduced selectivity, which generate a significant variability of the results after crop treatment, including lack of efficacy on apples and pears (American Bee Journal, 122:287-289, 1982).

Another attempt to attract bees to flowers was done via spraying with synthetic Nasonov pheromone derivatives, (Entomologia Experimentalis et Applicata 30:199-201, 1981), but also this composition was proved unsuccessful (HortScience. 29:155-158, 1994).

It was also proposed to use mass spraying honeybee queen mandibular pheromone (QMP) directly on the flowering trees. The rationale behind the use of QMP is that foraging bees will return to the hive bearing QMP residue, and will thus attract more bees to their waggle dance. Field trials, that involved the spraying of QMP on orchards in Canada, showed questionable statistical improvement of yield only in bad weather conditions and in one out of the two years through which the trials were conducted (Journal of Economic. Entomology 85:1293-1299, 1992, Journal of Economic. Entomology. 85:1300-1306, 1992).

It seems that the above attempts were lacking in their capability to reliably attract bees to the flowers and facilitate enhanced pollination because spraying is done arbitrarily without taking into account the timing of nectar secretion, thus causing the bees to become averse to these odors which are associated with no nectar reward. Additional disadvantage result from the treatment applied over the whole plant, which generate confusion for the honey bee because the ensuing attracting odor does not emanate only from the flowers.

A potential solution to the conflict between signals of a reach source of nectars and real low rewards is to concomitantly spray a honey bee attractant and a brood ester pheromone (BEP), which composed of a blend of 10 fatty acids methyl and ethyl esters, and which reduces sucrose threshold of honey bee workers (Behavioral Ecology and Sociobiology 49:206-213, 2001) and stimulates pollen foraging (Behavioral Ecology and Sociobiology 44: 193-198, 1998).

Patent application US 2011/0021622, claim the use of stabilized BEP (with 0.005 - 5% tertiary-butyl hydroquinone), in combination with synthetic honey bee QMP to honey bees, honey bee colonies or pollination units, or administration of stabilized BEP to honey bees, honey bee colonies or pollination units, in combination with synthetic honey bee queen mandibular gland pheromone administered to flowering plants on which enhanced pollination is desired. Stabilization of BEP with a chemical food additive, commonly perceived as non-natural, could raise concerns about honey contamination. In patent application US 2011/0021622 there are no claims about the use of BEP in combination with a pollinator attractant, like synthetic honey bee QMP, for treatment of flowering plant. This patent application did not disclose the ratio between BEP and QMP on claimed combination or the dose on which BEP should be applied to flowering crop in order to enhance their pollination.

Production cost of brood pheromone from pure fatty acids is rather expensive. Patent US 7,727,517 disclose the fact that the brood pheromone, formulated by using technical grade compounds, with a composition which varies from the natural one, still preserves a significant biological effects. Authors used technical grade fatty acids from which they produced methyl and ethyl esters, mixing then to the required proportion. Thus the production costs was significantly lower with technical grade components, there are further possibilities to reduce the costs of production.

### Summary of the Invention

The present invention was made in the view of the prior art describe above and the object of the present invention is to provide a composition, which attract the pollinator to the flower of cultivated plant by enhancement of flowers scent, and modify the behavior of attracted honey bee o pollen foraging, as well a process for obtaining such composition easily, reliably, with lower cost and without the use of artificial food additives perceived as non-natural, and a method for an effective application of the pollination enhancers composition to the crop.

To solve the problem the present invention provide a composition for crop pollination enhancement which include ethyl-maltol, a well-known compound acting as flavor enhancers, and a synthetic mixture of ethyl and methyl esthers of fatty acids, which continue to have similar activity with brood esthers pheromone. The synthetic mixture of ethyl and methyl esthers of fatty acids is produced by mixing ethyl and methyl esthers of fatty acids resulted from the transesterifications of olive oil and flax seed oil and from the esterification of the technical grade stearic acid. On this composition of fatty acids esthers is added ethyl-maltol. Resulting composition is mixed with a solution of sodium alginate, methylcellulose and an emulsifier. The resulted emulsion is ionotropic gellated with a solution of calcium chloride, diluted with water and sprayed to the crop.

Maltol and ethyl-maltol are well-known as being flavor enhancers (Food Technology, 43: 78, 1989), but was not used till now for pollinator attraction by scent enhancement. Maltol and methyl maltol were also demonstrated to have an anti-oxidant activity inhibiting lipid / fatty acids chains peroxidation (Biomedical Research-Tokyo 22: 183-186, 2001), but was not use as antioxidant for lipids or others fatty acids esthers.

### Detailed description of the invention

In a preferable embodiment of the invention the composition include the following: 2.50 ...2.80 parts methyl palmitate, 1.63 ... 1.71 parts ethyl palmitate, 16.26... 17.00 parts methyl stearate, 7.50 ... 7.68 parts ethyl stearate, 24.29... 24.76 parts methyl oleate, 5.45...5.65 parts methyl linoleate, 3.25 ... 3.40 parts ethyl linoleate, 16.74 ... 17.15 parts methyl linolenate, 12.38...12.89 parts ethyl linolenate, 0.5 parts ethyl-maltol, parts being expressed as weight units.

The process to obtain the above composition include the following steps: production of methyl and ethyl esters from olive oil, flax seed oil and technical stearic acid, using known process; combination of the obtained esthers in the following proportions: methyl esthers from olive oil 64 parts; methylic esthers from technical grade stearic acid 48 parts; methylic esthers form flax seed oil 88 parts; ethylic esthers from olive oil 8.5 parts; ethylic esthers technical grade stearic acid 24.5 parts, ethylic esthers from flax seed oil 67 parts, parts being expressed as weight units; dissolution, by vigorous mixing, of 1,5 parts ethyl-maltol in 300 parts of above esthers composition, parts being expressed as weight units.

The method of composition application involve the following steps: preparation of 500 ml solution 6 g/l sodium alginate, 4 g/l methylcellulose and 0.5 g Polysorbate 80 in distilled water; slowly and gradually addition, in small quantities and with continuous agitation, of 3 g mixtures of fatty acids esthers and ethyl-maltol, over the 500 ml of dispersion sodium alginate, methylcellulose and Polysorbate 80 and homogenization on a turbo-mixer; addition, under continuous agitation, over the emulsion of fatty acids esthers and ethyl maltol and Polysorbate 80 on sodium alginate and methylcellulose, of 500 ml solution of calcium chloride 0,67 g/l; maintaining of the mixture for 30 min for perfection of the calcium alginat microbeads loaded with mixture of fatty acids esthers and ethyl-maltol; dilution of calcium alginat microbeads suspension till 600 liters and use the final suspension for treatment of 1 ha of cultivated plant, by using normal spraying equipment.

The product done according to invention have the following advantages: lower cost of production due to the fact that is done from accessible raw materials; increased stability during storage at room temperature, due to the presence of ethyl-maltol, which have an action of preventing the peroxidation of double bonds from fatty acid esthers; perception as a product without chemical additives, maltol being a natural ingredient of some flavors; lack of attracting activity of product arriving on leaves, on which ethyl-maltol do not have scent to enhance and the action of brood esthers pheromone is limited to modification of foraging behavior.

The process used to obtain the composition have the advantage of a final mixture which is close to the composition of the natural brood esthers pheromone, despite the use of largely available raw materials like olive oil or flax seed oil.

The method for application has the following advantages: formation of a complex mixture from which the pollination enhancement composition is loaded into microbeads from which is controlled released; stabilization of the suspension of calcium alginate microbeads by the added methyl-cellulose.

### Examples.

Hereinafter, the present invention is described in more detail and specifically with reference to the Example, which however are not intended to limit the present invention.

### Example 1. Preparation of the pollination enhancement composition

On a balloon with 3 necks and with mixer, condenser and thermometer were introduced the quantities of edible oil, of olive or of flax seed, or stearic acid technical grade (containing min. 75% stearic acid). KOH p.a. (0.6% to the quantity of oil/ stearic acid) was dissolved in methanol, respectively ethanol (taken into excess of 50% comparing to the stoichiometry required quantity for reaction). The corresponding solution of KOH in methanol or ethanol was introduced under agitation over the oil / stearic acid technical grade. The resulted composition was maintained under continuous mixing, at room temperature, for 60 min.

In case of using oil the reaction mass was transferred into a separation funnel and after 3 ore was separated the first raw glycerol from the first raw methyl and, respectively ethyl esthers. The fraction of methyl and, respectively, ethyl esthers was re-introduced into the balloon. KOH p.a. (0.3% to the quantity of raw esthers) was dissolved in methanol, respectively ethanol (taken 0,7% of the existing quantity of raw esthers). The corresponding solution of KOH in methanol or ethanol was introduced under agitation over the oil / stearic acid technical grade. The resulted composition was maintained under continuous mixing, at room temperature, for 60 min. The reaction mass was transferred into a separation funnel and after 3 ore was separated the second raw glycerol from the second raw methyl and, respectively ethyl esthers.

The second raw methyl and, respectively esthers resulted from the trans-esterification of the olive oil / flax seed oil, and the product of reaction of esterification of the technical grade stearic acid were introduced into a installation of volatile separation, on vacuum, for release the solvent. The temperature of reaction was maintained under 55°C, and the reduced pressure to 20 torr.

The resulted esthers, which could be obtained also by using different processes of (trans)esterification from edible oil of olive and flax seed and from stearic acid technical grade, were combined in the following proportions: methyl esthers from olive oil 64 parts; methylic esthers from technical grade stearic acid 48 parts; methylic esthers form flax seed oil 88 parts; ethylic esthers from olive oil 8.5 parts; ethylic esthers technical grade stearic acid 24.5 parts, ethylic esthers from flax seed oil 67 parts, parts being expressed as weight units.

Were done, according to the described method, three different batch of esthers mixture, using three different batches of edible oils and stearic acid technical grade. The resulted mixture of three batches was analyzed by gas-chromatography, for the determination of the exact proportion on the mixture. The result is presented in table 1. The composition is not very different from the composition of the natural brood esthers pheromones (Journal of Economic Entomology 97:748-751, 2004).

**Tab.1. Composition, determined by gas-chromatography, of the mixture realized according to the Example 1, of methyl and ethyl esthers of fatty acids, produced using three different batch of esthers mixture, using three different batches of edible oils and stearic acid technical grade**

| Ester | Batch 1 | Batch 2 | Batch 3 | Average |
|---|---|---|---|---|
| Ethyl palmitate | 2.51 | 2.72 | 2.81 | 2.68 |
| Methyl palmitate | 1.78 | 1.64 | 1.72 | 1.71 |
| Methyl stearate | 16.34 | 16.74 | 17.08 | 16.72 |
| Ethyl stearate | 7.72 | 7.54 | 7.63 | 7.63 |
| Methyl oleate | 24.88 | 24.41 | 24.71 | 24.67 |
| Ethyl oleate | 8.05 | 7.73 | 7.62 | 7.80 |
| Methyl linoleate | 5.68 | 5.82 | 5.48 | 5.66 |
| Ethyl linoleate | 3.38 | 3.42 | 3.27 | 3.36 |
| Methyl linolenate | 16.82 | 17.03 | 17.24 | 17.03 |
| Ethyl linolenate | 12.84 | 12.95 | 12.44 | 12.74 |

In 300 parts of the above mixture was dissolved, by vigorous mixing, 1.5 parts ethyl-maltol, and parts being expressed as weight units. The resulting composition was used for the treatment of cultivated plant.

### Example 2 - Treatment of the cultivated plant

For experimentally treatment of cultivated plant it was prepared 50 ml solution including 6 g/l sodium alginate, 4 g/l methylcellulose and 0.5 g Polysorbate 80 in distilled water. Over this solution were slowly and gradually added, in small quantities and with continuous agitation, 300 mg mixtures of fatty acids esthers and ethyl-maltol. The resulted emulsion was homogenized with a turbo-mixer. Over this emulsion fatty acids esthers and ethyl maltol and Polysorbate 80 on sodium alginate and methylcellulose, were added, under continuous agitation, 50 ml solution of calcium chloride 0.67 g/l. The resulting mixture was maintained for 30 min, for perfection of formation of calcium alginate microbeads loaded with mixture of fatty acids esthers and ethyl-maltol. From the resulted calcium alginate microbeads suspension were taken 10% (around 10, 2 ml) and diluted till 6 liters with water. This final suspension was used for experimental treatment of 100 m² (4 plots of 25 m²) of cultivated plant.

The efficacy of the composition for pollination enhancement of the method for filed treatment, was done in comparison with a not -treated control and a standard product control, synthetic mixture of Nasonov pheromone (citral: geraniol: nerol 1:1:0,5). The experiment was done on commercial culture of hairy vetch (Vicia villosa, cv. Welta), on a red preluvosoil. The experiment was randomized organized, with three treatments, each with four repetitions: V₁ - control, un-treated; V₂ - standard product, treated with mixture of citral: geraniol: nerol 1:1:0,5 (0,75 ml mixture per 25 m², equivalent to a dose of 300 ml per ha); V₃ - treatment with the product according to invention, 7,5 mg per 25 m², equivalent to a dose of 3 g per ha.

Each repetition was represented by an experimental area of 25 m² ( experimental plot of 5 x 5 m) randomly placed at a distance of 60 meters between each plot. Treatments were done initially at 20% flowering were repeated after an interval of 10 days.

Feeding activity of honey bee was noted by numbering the pollinators which are feeding on an interval of 15 min on a number of 10 plants, randomly selected from each repetition.

**Tab.2. Influence of treatments on the pollinator visit and seed production on hairy vetch (Vicia villosa cv. Welta).**

| Treatment | Average number of pollinators per flower at 15 min | Average weight of 1000 seeds | Number of seeds per pods | Yield (kg/ha) |
|---|---|---|---|---|
| control, un-treated | 5,5^{a} | 38,2^{a} | 3,9^{a} | 1 177^{a} |
| citral: geraniol: nerol 1:1:0,5 equivalent to a dose of 300 ml per ha | 6,8^{a} | 39,6^{a} | 3,8^{a} | 1 237^{a} |
| Composition according to invention, 3 g per ha | 7,2^{b} | 44,7^{b} | 4,7^{b} | 1 454^{b} |
| DL 5% | 1,4 | 3,4 | 0,6 | 206 |

Value followed by the same letter not differ significantly for P>0,05
Results from tab. 2 demonstrate the efficacy of product, done according to invention and applied according to the method here disclosed, for the increase of the production of treated crop due to an enhanced pollination.

## Claims

1. Pollination enhancement composition which comprise 2.50 ...2.80 parts methyl palmitate, 1.63 ... 1.71 parts ethyl palmitate, 16.26... 17.00 parts methyl stearate, 7.50 ... 7.68 parts ethyl stearate, 24.29... 24.76 parts methyl oleate, 5.45...5.65 parts methyl linoleate, 3.25 ... 3.40 parts ethyl linoleate, 16.74 ... 17.15 parts methyl linolenate, 12.38... 12.89 parts ethyl linolenate, 0.5 parts ethyl-maltol, parts being expressed as weight units.

2. Process to obtain the composition according to claim 1 which comprise the following steps: production of methyl and ethyl esters from olive oil, flax seed oil and technical stearic acid; combination of the obtained esthers in the following proportions: methyl esthers from olive oil 64 parts; methylic esthers from technical grade stearic acid 48 parts; methylic esthers form flax seed oil 88 parts; ethylic esthers from olive oil 8.5 parts; ethylic esthers technical grade stearic acid 24.5 parts, ethylic esthers from flax seed oil 67 parts, parts being expressed as weight units; dissolution, by vigorous mixing, of 1,5 parts ethyl-maltol in 300 parts of above esthers composition, parts being expressed as weight units.

3. Method for application of composition according to claim 1 which comprise the following steps: preparation of 500 ml solution 6 g/l sodium alginate, 4 g/l methylcellulose and 0.5 g Polysorbate 80 in distilled water; slowly and gradually addition, in small quantities and with continuous agitation, of 3 g mixtures of fatty acids esthers and ethyl-maltol, over the 500 ml of dispersion sodium alginate, methylcellulose and Polysorbate 80 and homogenization on a turbo-mixer; addition, under continuous agitation, over the emulsion of fatty acids esthers and ethyl maltol and Polysorbate 80 on sodium alginate and methylcellulose, of 500 ml solution of calcium chloride 0,67 g/l; maintaining of the mixture for 30 min for perfection of the calcium alginat microbeads loaded with mixture of fatty acids esthers and ethyl-maltol; dilution of calcium alginat microbeads suspension till 600 liters and use the final suspension for treatment of 1 ha of cultivated plant, by using normal spraying equipment.
